# Europäisches Patentamt

# European Patent Office

# Office européen des brevets

(19)

(11) Veröffentlichungsnummer: **0 172 496**
**B1**

(12) **EUROPÄISCHE PATENTSCHRIFT**

(45) Veröffentlichungstag der Patentschrift:
02.11.88

(21) Anmeldenummer: 85109948.1

(22) Anmeldetag: 07.08.85

(51) Int. Cl.⁴: **F 27 D  1/02,** F 27 D  1/04,
**C 04 B**  35/56

(54) Feuerfestes Deckenelement für einen Industrieofen, Decke für einen Industrieofen aus feuerfesten Deckenelementen sowie Industrieofen mit einer solchen Decke.

(30) Priorität: 18.08.84  DE 3430470

(43) Veröffentlichungstag der Anmeldung:
26.02.86 Patentblatt 86/9

(45) Bekanntmachung des Hinweises auf die Patenterteilung:
02.11.88 Patentblatt 88/44

(84) Benannte Vertragsstaaten:
DE FR GB IT

(56) Entgegenhaltungen:
FR-A-1 243 294
FR-A-2 257 882
GB-A-972 288
GB-A-2 003 592
GB-A-2 143 312

CHEMICAL ABSTRACTS, Band 92, 1980, Seite 291,
Nr. 81003c, Columbus, Ohio, US; H. PETER: "Energy
savings and quality improvements by using
refractories of recrystallized silicon carbide"

(73) Patentinhaber: RIEDHAMMER GMBH UND CO. KG,
Schleifweg 45, D-8500 Nürnberg 10 (DE)

(72) Erfinder: Kölln, Bernd, Eichenstrasse 8, D-8501
Ammerndorf (DE)

(74) Vertreter: Becker, Thomas, Dr., Dipl.- Ing.,
Eisenhüttenstrasse 2, D-4030 Ratingen 1 (DE)

EP 0 172 496 B1

## Beschreibung

Die Erfindung betrifft ein feuerfestes, als Profilteil gestaltetes Deckenelement zur freitragenden Abdeckung der lichten Weite eines Industrieofens zum Ofeninnenraum hin, eine Decke für einen Industrieofen aus feuerfesten Deckenelementen sowie einen Industrieofen mit einer solchen Decke. Nachfolgend wird anstelle von Deckenelementen stets von Profilteilen gesprochen.

Es sind verschiedene Decken für Industrieöfen bekannt. Eine Möglichkeit besteht in der Konstruktion einer Decke als Gewölbe. Meistens werden dabei Kreisbogengewölbe angewandt. Das Gewölbe ist dabei mit Radialsteinen handelsüblicher Formate gemauert.

Die Gewölbe können beispielsweise aus Silika- oder Schamottesteinen bestehen. Die Stabilität derartiger Gewölbekonstruktionen ist jedoch beschränkt, weil beispielsweise durch Kristallumwandlung bei Schamottesteinen Volumenveränderungen durch Temperaturbeanspruchungen auftreten.

Gewölbekonstruktionen werden beispielsweise für Glaswannen oder Siemens-Martin-Öfen eingesetzt.

Insbesondere für größere Spannweiten sind Gewölbekonstruktionen nicht gebräuchlich. Hier werden dann sogenannte Hängedecken verwendet, die gleichfalls aus feuerfesten Steinen gebildet werden, die hängend von einer Stahlkonstruktion getragen werden, die keiner hohen Temperaturbeanspruchung ausgesetzt ist. Es gibt eine Vielzahl verschiedener Ausführungen derartiger Hängedecken (zum Beispiel gemäß deutscher Offenlegungsschrift 1 815 687). Ein Vorteil der Hängedecken liegt darin, daß die Form beliebig sein kann. So sind auch ohne weiteres fläche Hängedecken möglich.

Je nach Temperaturbeanspruchung bestehen die Steine derartiger Hängedecken aus unterschiedlichen Feuerfestqualitäten.

Auch die Hängedecken weisen jedoch eine Vielzahl von Nachteilen auf.

Da sie aus einer großen Zahl von einzelnen Steinen zusammengesetzt werden, die überdies mittels entsprechender Anker an einer Stahlkonstruktion befestigt werden müssen, ist der Montageaufwand erheblich. Darüber hinaus sind derartige Decken sehr schwer. Beim Beheizen des Ofens wird die große Deckenmasse mit aufgeheizt, wodurch zum Teil erhebliche Energiemehrbelastungen entstehen. Eine Anwendung bei periodisch betriebenen Öfen beziehungsweise in Betrieben, wo die Öfen zum Wochenende oder an Feiertagen abgeschaltet werden sollen, ergeben sich durch das ständige Aufheizen und Abkühlen Volumenausdehnungen und -kontraktionen in den feuerfesten Steinen, ferner entstehen Spannungen, die zu Rißbildungen führen, wobei ein Herabfallen von einzelnen Körnern oder Teilen der feuerfesten Deckensteine nicht immer verhindert werden kann.

Insbesondere beim Betrieb derartiger Industrieöfen für empfindliches Brenngut treten deshalb häufig Schäden durch herabfallende Teilchen auf. Beispielhaft sei hier das Brennen von Sanitärkeramik genannt, wo herabfallende Teilchen des Feuerfestmaterials, die auf die Glasur gelangen, das Brennstück unverkäuflich machen.

Sind aber an einer solchen Hängedecke erst einmal größere Schäden aufgetreten, so ist ihre Ausbesserung sehr kompliziert, weil man nur schwer an die beschädigten Stellen herankommt, ohne den Ofen abzuschalten.

Schließlich ist auch die Verankerung der feuerfesten Steine an einer metallischen Halterung problematisch, weil beide Materialien nicht nur unterschiedliche Wärmeausdehnungskoeffizienten besitzen, sondern die feuerfesten Materialien über die Metallanker auch Korrosionsangriffen ausgesetzt werden können und die Isolierung der Decke als Ganzes an den metallischen Aufhängungen unterbrochen ist. Aus dem deutschen Gebrauchsmuster 1 832 912 ist ein Decken-Formstein bekannt, der aus einer Stampfmasse besteht, die armiert ist. Hierdurch wird das Deckenelement schwerer und bei höheren Temperaturen entstehen Probleme durch unterschiedliche Wärmeausdehnungskoeffizienten von Armierung und feuerfestem Material.

Aus der FR-A-2 257 882 ist ein Deckelelement (Profilteil) mit U-förmigem Querschnitt bekannt, das aus feuerfesten Fasermaterialien besteht.

Der Erfindung liegt die Aufgabe zugrunde, eine Möglichkeit aufzuzeigen, mit der Decken von Industrieöfen so gestaltet werden können, daß sie einerseits schnell und leicht montierbar sind, andererseits aber auch eine hohe Formstabilität aufweisen, so daß ein Ablösen und Herabfallen von Teilchen des Deckenmaterials verhindert wird.

Darüber hinaus soll die Decke eine gute Isolierung ermöglichen und für etwaige Reparaturarbeiten zugänglich sein.

Die Erfindung sieht dazu sowohl ein feuerfestes Deckenelement gemäß Anspruch 1 vor, das als ofenkanalseitig einsetzbares, selbsttragendes Bauteil einer Deckel eines Industrieofens verwendet wird, als auch eine Decke für einen Industrieofen mit den Merkmalen des Anspruches 8 und einen Industrieofen selbst mit den Merkmalen des Anspruches 9. Vorteilhafte Weiterbildungen sind in den übrigen Ansprüchen und Anmeldungsunterlagen beschrieben.

Ein wesentliches Merkmal der Erfindung ist, daß die Decke eines Industrieofens als selbsttragende Einheit unter Verwendung entsprechender selbsttragender feuerfester Profilteile gebildet wird.

Damit die Profilteile sich sicher zwischen gegenüberliegenden Seiten des Ofenkanals erstrecken können, müssen sie insbesondere zwei Kriterien erfüllen. Sie müssen eine

ausreichende Festigkeit, und zwar insbesondere Biegefestigkeit, ebenso wie eine ausreichende Temperaturbeständigkeit und Temperaturwechselbeständigkeit aufweisen. Je nach Breite der Ofenkammer beziehungsweise des Ofenkanals sowie der darin maximal erreichbaren Temperaturen können die feuerfesten Profilteile sowohl in konstruktiver Hinsicht, als auch in ihrem chemischmineralogischen Aufbau angepaßt werden.

Bei der Verwendung feuerfester Profilteile mit im wesentlichen langgestreckter Rechteckform (in der Aufsicht) können zur Erreichung günstiger Biegefestigkeiten beispielsweise Profile mit U-förmigem Querschnitt (senkrecht zur Längserstreckung) verwendet werden. Zur weiteren Erhöhung der Biegesteifigkeit können die Basisschenkel derartiger U-Profilteile zusätzlich beispielsweise noch wellen-, sägezahn- oder zinnenförmig gestaltet sein. Eine weitere Verbesserung der Biegesteifigkeit kann erreicht werden, falls die Profilteile als Ganzes oder Teile davon in bezug auf den Ofenkanal konvex ausgebildet sind.

Je nach Ofentyp und darin erreichbaren Temperaturen können die feuerfesten Profilteile aus unterschiedlichen Siliziumkarbid-Werkstoffen hergestellt sein, die wegen ihrer günstigen thermischen Ausdehnungskoeffizienten und guten Biegebruchfestigkeiten insbesondere auch für höhere Temperaturen bis 1600° C verwendbar sind.

Ein geeigneter Werkstoff für Anwendungsbereiche bis 1400° C ist reaktionssiliziertes Siliziumkarbid, SiSiC, das extrem hart, hochbeständig gegen Erosion, Korrosion und Oxidation sowie gasdicht ist. Die Herstellung eines derartigen Werkstoffes erfolgt nach pulvertechnologischen Verfahren unter Anwendung verschiedener Formgebungsmethoden, beispielsweise Gießen. Insbesondere für periodisch (diskontinuierlich) betriebene Öfen eignet sich dieser Werkstoff aufgrund seiner günstigen Thermoschock-Beständigkeit und geringen Kriechdehnung bei hohen Temperaturen. Die geringe Wärmedehnung und hohe Maßhaltigkeit, verbunden mit günstigen mechanischen Eigenschaften, ermöglicht es, auch größere Profilteile daraus herzustellen, um Ofenkanäle beziehungsweise -kammern größerer Ausmaße über ihre Gesamtbreite mit den Profilteilen ohne zusätzliche Unterstützungen abdecken zu können.

Sind noch höhere Anwendungstemperaturen gegeben, so eignet sich als Werkstoff unter anderem rekristallisiertes Siliziumkarbid. Dieser Werkstoff hat die günstige Eigenschaft, daß seine Biegebruchfestigkeit sich mit steigenden Temperaturen erhöht. Während sie bei 20° C beispielsweise 100 MPa beträgt, liegt sie bei 1250° C schon um etwa 20 %, bei 1400° C sogar um 30 % über den Werten bei Raumtemperatur. Die maximale Anwendungstemperatur ist erst bei circa 1600° C erreicht.

Eine Decke für einen Industrieofen ist erfindungsgemäß aufgebaut aus mehreren, hintereinander angeordneten, feuerfesten Profilteilen (Deckenelementen) der vorstehend beschriebenen Art sowie einer oder mehreren darüber angeordneten Isolierschichten, vorzugsweise aus Fasermaterialien insbesondere Aluminiumoxid- oder Aluminiumsilikatfasern. Durch eine kraft- oder formschlüssige Verbindung der Deckenelemente entsteht eine geschlossene Deckenunterfläche. Die Verbindung der feuerfesten Profilteile untereinander ist wichtig, um Schlitze oder Spalten in der Decke zu verhindern, durch die Verbrennungsgase entweichen oder Falschluft angesaugt werden könnten.

Je nach Formgebung der feuerfesten Profilteile kann es vorteilhaft sein, die Verbindungsstellen der Profilteile zusätzlich abzudichten. Hierzu kann vorgesehen werden, daß sich die Profilteile über einen gewissen Abschnitt überlappen, gegebenenfalls mittels einer Nut-Feder-Verbindung.

Oberhalb der feuerfesten Profilteile sind verschiedene Isolierschichten aufgesetzt. Aufgrund der thermischen Verhältnisse sowie zur Kostenoptimierung können mit zunehmenden Abstand von den feuerfesten Profilteilen Isolierqualitäten mit geringerer Temperaturbeständigkeit Verwendung finden. Besonders vorteilhaft ist der Einsatz von Faser-Isolierstoffen, die gewichtsmäßig sehr leicht und bequem verarbeitbar sind. Derartige Fasermaterialien werden beispielsweise in Mattenform angeboten und können ohne weiteres auf die nebeneinander angeordneten und miteinander verbundenen feuerfesten Profilteile aufgelegt werden.

Die feuerfesten Profilteile mit darüber angeordneter Isolierung, die wiederum aus unterschiedlichen Isolierschichten bestehen kann, kann als vorgefertigtes Kompakt-Bauteil eingesetzt werden. Die feuerfesten Profilteile mit Isolierung können dann quasi als "Verbundwerkstück" bei der Montage der Decke verarbeitet werden. Um in diesem Fall Spalten oder offene Nähte zwischen den einzelnen Bauteilen zu verhindern sind die Verbundwerkstücke vorzugsweise mittels einer Nut-Feder-Verbindung aneinander setzbar.

Die Ofendecke wird beispielsweise bei einem Rollenofen zum Brennen keramischer Erzeugnisse auf den Seitenwänden des Ofens unmittelbar oder mittelbar lösbar aufgelegt. Hierzu können die Ofenwände beispielsweise mit einer nach innen offenen Stufe versehen sein, in die die feuerfesten Profilteile eingelegt werden. Eine derartige Anbringung ermöglicht nicht nur eine sehr leichte Montage, sondern erlaubt auch im Fall von Störungen ein leichtes Abnehmen und damit einen leichten Zugang zum Ofenkanal.

Es kann auch auf beziehungsweise an den Seitenwänden eine Hebeeinrichtung vorgesehen werden, um die Decke als Ganzes, oder segmentweise für Reparaturarbeiten anzuheben.

**0 172 496**

Die mit der Erfindung verbundenen Vorteile sind offensichtlich. Gegenüber konventionellen Decken, insbesondere Hängedecken, wird die Montage wesentlich vereinfacht. Während üblicherweise je m² etwa 31 Feuerfeststeine bei Hängedecken montiert und an der Stahlkonstruktion befestigt werden müssen, genügt erfindungsgemäß die Montage von 1 bis 2 feuerfesten Profilteilen, die überdies bequem auf den Ofenwandungen befestigt werden können. Ebenso kann die Isolierung sehr viel einfacher aufgebracht werden. Durch die mögliche Verwendung besonders leichter Isoliermaterialien wird das Gewicht der Decke drastisch reduziert. Darüber hinaus wird die aufzuheizende Masse erheblich gesenkt, was insbesondere bei periodisch betriebenen Öfen vorteilhaft ist.

Die Isoliereigenschaften können deutlich verbessert werden. Während für Hängedecken konventioneller Bauart mit Isoliersteinen von einem Wärmeverlust von etwa 1140 kcal/m²/h ausgegangen werden muß, kann dieser Wert bei einer erfindungsgemäßen Decke auf unter 700 kcal/m²/h erniedrigt werden.

Ebenso sind die Investitionskosten niedriger.

Der Aufbau einer erfindungsgemäßen Decke aus nur wenigen, selbsttragenden Bauteilen beseitigt das Problem des Herabfallens feuerfester Teilchen auf das zu brennende Gut im Ofenkanal beziehungsweise in der Ofenkammer vollständig. Die Ofenunterdecke ist dabei vorzugsweise in sich geschlossen und gasdicht.

Die erfindungsgemäßen feuerfesten Profilteile sowie die daraus hergestellten Decken sind für jede Art Industrieöfen geeignet, und zwar insbesondere sowohl für stationäre, diskontinuierlich betriebene Öfen, die nach jedem Brennvorgang wieder abgekühlt werden, als auch für sogenannte Durchlauföfen. Das Einsatzgebiet erstreckt sich von Öfen zum Schmelzen oder thermischen Behandeln von Metallen bis zu Industrieöfen für die keramische Industrie, beispielsweise Rollenöfen für Sanitärkeramik.

Anhand der Zeichnung wird nachstehend die Erfindung beispielhaft näher erläutert.

Dabei zeigen:

Figur 1: einen Hauptquerschnitt durch einen erfindungsgemäßen Rollenofen (schematisch)

Figur 2: eine Aufsicht auf eine erfindungsgemäße Decke eines Rollenofens gemäß Figur 1 (schematisch)

Figur 3: eine Ausführungsvariante eines erfindungsgemäßen feuerfesten Profilteils.

Figur 4: eine weitere Variante eines erfindungsgemäßen feuerfesten Profilteils.

Figur 5: eine dritte Variante eines erfindungsgemäßen feuerfesten Profilteils mit Verbindungselement

Figur 6: eine Ausführungsform eines erfindungsgemäßen Ofens mit doppelter Ofenkanalbreite.

Figur 7: eine zweite Ausführungsvariante eines Ofens mit vergrößerter Ofenkanalbreite.

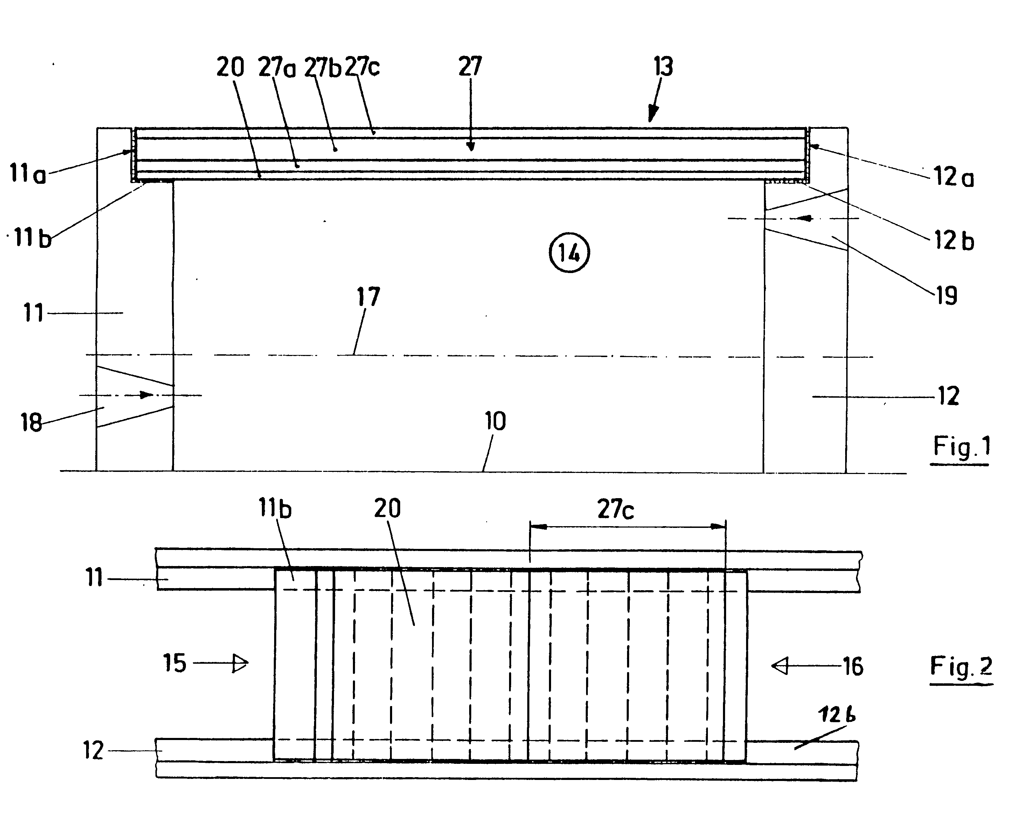

In Figur 1 ist ein erfindungsgemäßer Industrieofen dargestellt, und zwar ein Tunnel-Rollenofen zum Brennen keramischer Werkstücke.

Der Ofen ist auf einem Fundament 10 aufgebaut und besteht im wesentlichen aus zwei Seitenwänden 11, 12 und einer sich zwischen den Seitenwänden 11, 12 erstreckenden Decke 13. Fundament 10, die Seitenwände 11, 12 und die Decke 13 begrenzen den Ofenkanal 14, durch den das zu brennende Gut (nicht dargestellt) vom Ofeneingang 15 zum Ofenausgang 16 transportiert wird, und zwar auf hintereinander angeordneten Rollen 17. Die Rollen 17 erstrecken sich über die gesamte Ofenkanalbreite und die Seitenwände 11, 12, in denen sie auch drehbar gelagert sind. Der Antrieb der Rollen 17 erfolgt außenseitig über entsprechende bekannte Einrichtungen, beispielsweise einen Kettentrieb, mit dem die einzelnen Rollen untereinander verbunden sind.

Entlang des Ofenweges und höhenmäßig versetzt sind Brenner 18, 19 in den Seitenwänden 11, 12 angeordnet, von denen in Figur 1 zwei Stück dargestellt sind.

Die erfindungsgemäße Decke 13 wird, wie die Figuren 1 und 2 zeigen, aus mehreren, hintereinander angeordneten und sich zwischen den Seitenwänden 11, 12 erstreckenden feuerfesten Profilteilen 20 gebildet.

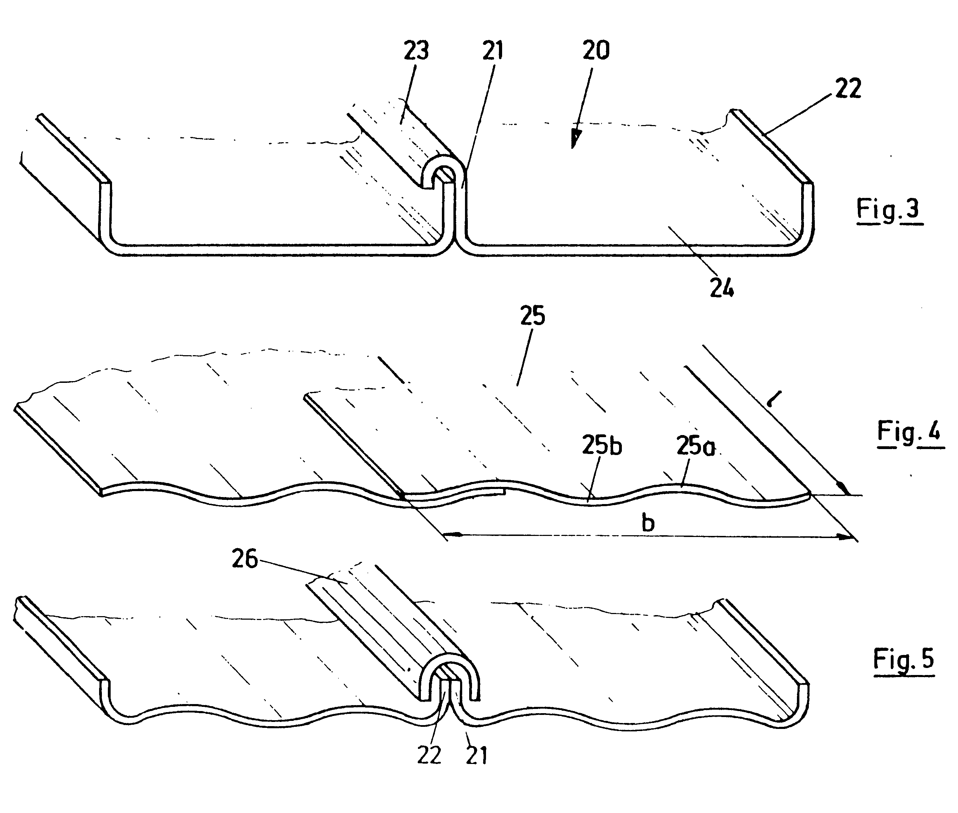

Zur Aufnahme der feuerfesten Profilteile 20 sind die Seitenwände 11, 12 an ihrem oberen Endbereich jeweils mit einer nach innen offenen Stufe 11a, 12a ausgebildet. So können sich die feuerfesten Profilteile 20, die, wie Figur 2 zeigt, in der Aufsicht eine Rechteckform aufweisen, zwischen den Seitenwänden 11, 12 mit ihren schmalen Enden auf den horizontalen Abschnitten 11b, 12b der Stufen 11a, 12a abstützen. Auf diese Weise sind die feuerfesten Profilteile 20 als ofenkanalseitig einsetzbare, selbsttragende Bauteile der Decke 13 gestaltet. Die Befestigung erfolgt durch einfaches Auflegen, oder auch Verschrauben oder Klammern. Beispielhafte Ausführungsformen der feuerfesten Profilteile 20 ergeben sich aus den Figuren 3 bis 5.

Im Ausführungsbeispiel nach Figur 3 sind die Profilteile 20 mit im wesentlichen U-förmigem Querschnitt senkrecht zu ihrer Längserstreckung ausgebildet. Durch die beiden parallelen, seitlichen U-Schenkel 21, 22 kann die Biegensteifigkeit des Bauteils deutlich erhöht werden. Zur Verankerung der einzelnen Profilteile 20 untereinander ist im Ausführungsbeispiel gemäß Figur 3 jeweils ein U-Schenkel 21 an seiner offenen Stirnseite nach außen umgefalzt. Der Falz 23 ist so gestaltet, daß er den im wesentlichen senkrecht zum Basisschenkel 24 auslaufenden Schenkel 22 des jeweils nächsten Profilteils 20 umgreifen kann, wodurch eine Abdichtung des die Decke 13 bildenden Profilteil-Verbundes zum Ofenkanal 14 hin erreicht wird. Der Falz 23 kann eine solche Öffnungsweite haben, daß er den U-Schenkel 22 ohne Spiel umgreift, es kann im Bereich des Falzes 23 aber auch noch eine zusätzliche Abdichtung zum Ofenkanal 14 hin vorgesehen werden.

Eine andere Ausführungsform eines erfindungsgemäßen selbsttragenden Profilteils 20 zeigt Figur 4. Diese Profilteile 20 weisen zwar ebenfalls eine gegenüber ihrer Breite b sehr viel größere Länge 1 und damit in der Aufsicht im wesentlichen eine Rechteckform auf, jedoch keine aufgebogenen U-Schenkel. Vielmehr ist die Grundfläche 25 hier zur Erhöhung der Biegesteifigkeit der Profilplatten wellenförmig gestaltet. Ebenso wäre eine Ausbildung mit einem sägezahn- oder zinnenförmigen Querschnitt, senkrecht zur Längserstreckung, geeignet.

Durch die Ausbildung ineinanderübergehender Wellenberge 25a und -täler 25b ist eine leichte Verbindung und Abdichtung der Profilteile 20 untereinander gegeben, indem aneinander grenzende Profilteile über einen gewissen Teilbereich parallel übereinandergelegt werden.

Eine dritte Ausführungsvariante eines erfindungsgemäßen selbsttragenden feuerfesten Profilteils zeigt Figur 5. Dabei weist jedes Profilteil 20 senkrecht zur Längserstreckung einen U-förmigen Querschnitt auf. Zwischen den parallelen U-Schenkeln 21, 22, die im Gegensatz zum Ausführungsbeispiel gemäß Figur 3 gerade auslaufen, ist der Basisschenkel 24 hier jedoch wie beim Ausführungsbeispiel gemäß Figur 4 wellenförmig gestaltet.

Zur Verbindung einzelner Profilteile 20 untereinander, werden diese einfach mit ihren U-Schenkeln 21, 22 aneinandergeführt und mit einem Profilteil 26 mit halbkreisförmigem Querschnitt, das über die beiden nebeneinanderliegenden U-Schenkel 21, 22 gestülpt wird, abgedeckt. Zur weiteren Optimierung der Abdichtung der Decke 13 insgesamt können zwischen U-Schenkel 21, 22 und Profilteil 26 zusätzliche Dichtungsmaterialien (nicht dargestellt) eingebracht werden.

Vorzugsweise besteht das Profilteil 26 aus demselben Material wie die selbsttragenden Profilteile 20. Als besonders geeignet für die Erfüllung der gestellten Aufgabe, insbesondere hohe Biegesteifigkeit, Temperaturbeständigkeit und Temperaturwechselbeständigkeit haben sich Siliziumkarbid-Werkstoffe, wie reaktionssiliziertes Siliziumkarbid, SiSiC, und rekristallisiertes Siliziumkarbid herausgestellt.

Für besonders große Spannweiten zwischen endseitigen Auflagen können armierte Profilteile eingesetzt werden. Als Armierungsmaterialien können dabei hochtemperaturbeständige Fasern oder Gewebe, wie Kohlefasern, verwendet werden.

Neben den in den Figuren 2 bis 5 dargestellten Formen können die selbsttragenden Profilteile 20 die verschiedensten anderen Formen aufweisen. Eine vorteilhafte Ausführungsform sieht dabei vor, daß das Profilteil oder Teile davon mit Bezug auf die Mittenlängsachse des Ofenkanals 14 konvex ausgebildet sind, so daß das Profilteil 20, an einer Stelle entlang des Ofenweges betrachtet, Abschnitte aufweist, die einen größeren Abstand zur Grundfläche des Fundaments 10 aufweisen als andere. Hierdurch können gewölbeartige Deckenkonstruktionen erzielt werden, über die unter Umständen auch die Verbrennungsgase gerichtet geführt werden können. Die Decke 13 als solche besteht aber nicht nur aus den feuerfesten oder hochfeuerfesten Profilteilen 20, sondern zusätzlich noch aus einer darüber angeordneten Isolierung 27, die im Ausführungsbeispiel gemäß Figur 1 aus drei Schichten 27a, b, c aufgebaut ist.

Dabei weist die Isolierschicht 27a eine höhere thermische Beständigkeit gegenüber der Isolierschicht 27b auf. Die äußere Isolierschicht 27c weist die geringste Temperaturbeständigkeit auf, da in diesem Bereich auch die geringsten Temperaturen im Deckenbereich auftreten.

Die Isolierschichten bestehen beispielsweise aus mineralischen Faserplatten, die eine den feuerfesten Profilteilen 20 entsprechende Grundform aufweisen können. Als Materialien für derartige Isolier(faser)schichten 27 eignen sich beispielsweise Aluminiumoxid und/oder Aluminiumsilikatfasern. Diese weisen eine Temperatur beständigkeit zwischen 1400 und 1600° C auf. In den Außenisolierschichten können minderwertigere Qualitäten, beispielsweise Gesteinsfasermatten verwendet werden.

Vorzugsweise sind die Isolierplatten 27 breiter als die Profilteile 20, so daß sie, wie in Figur 2 dargestellt, mehrere feuerfeste Profilteile 20 überdecken und damit zusätzlich abdichten.

Die einzelnen Isolierschichten sind vorzugsweise gegeneinander sich überlappend aufgebracht. Zur besseren Abdichtung im Bereich der Stuten 11a, 12a können diese mehrstufig ausgebildet sein, so daß die einzelnen Schichten 27a, 27b, 27c vom Ofenkanal 14 nach außen betrachtet immer größere Breiten aufweisen, um die jeweils nächste Stufe vollständig abdecken zu können.

Durch die Verwendung der genannten Fasermatten kann eine sehr leichte Isolierung auf die feuerfesten Profilteile 20 aufgebracht werden. Auf Grund der geringen Belastung durch eine solche Isolierung von oben können die feuerfesten Profilteile 20 aus den genannten oder ähnlichen Materialien erhebliche Spannweiten selbsttragend überbrücken. Hierdurch wird der Anwendungsbereich der erfindungsgemäßen Profilteile 20 sowie der daraus hergestellten Decken 13 erheblich erweitert. Für einen Tunnel-Rollenofen, wie er in Figur 1 dargestellt ist, werden feuerfeste Profilteile der genannten Art mit einer Länge von etwa 2,65 m und einer Breite von etwa 50 cm verwendet. Auch noch größere Längen sind möglich, ohne daß die selbsttragenden Profilteile außer durch endseitige Auflager gestützt oder gehalten werden müssen. Insbesondere entfällt jede metallische Unterstützung, wie sie bei konventionellen Hängedecken zwingend erforderlich ist.

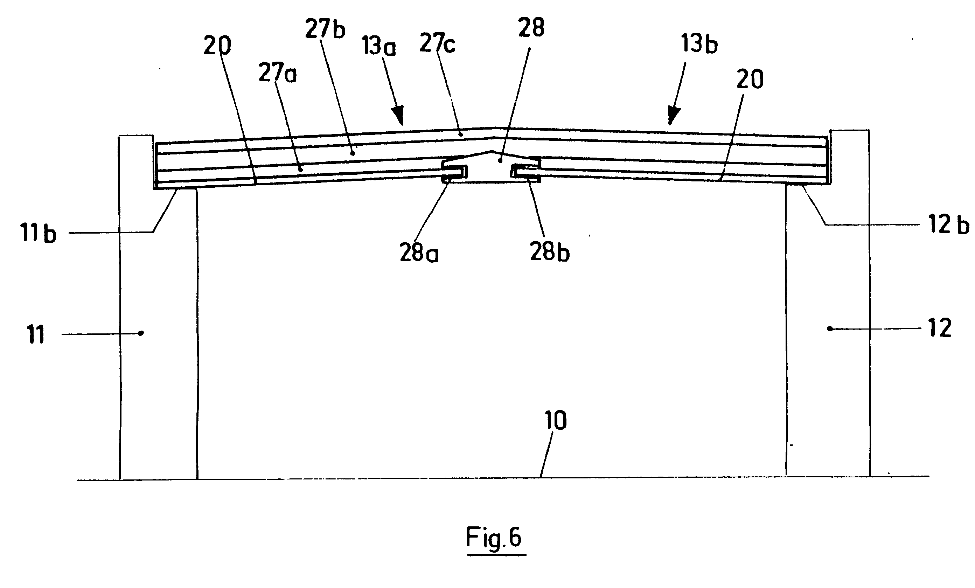

Sofern es notwendig ist, Industrieöfen mit besonders breitem Ofenkanal beziehungsweise mit einem besonders weiten Abstand zwischen den seitlichen Auflagern für die Decke herzustellen, kann die erfindungsgemäße Ofendecke 13 auch aus mehreren Ofendeckenteilen 13a, b hergestellt werden, wie dies beispielhaft in Figur 6 dargestellt ist.

Die einzelnen Ofendeckenteile 13a, b entsprechen dabei in ihrem Aufbau weitestgehend der vorstehend im einzelnen beschriebenen Ofendecke, also insbesondere aus hintereinander angeordneten, selbsttragenden, feuerfesten Profilteilen 20 und einer darüber angeordneten Isolierung 27a, b, c.

Um die aus zwei oder mehreren nebeneinander angeordneten Ofendeckenteilen 13a, b bestehende Ofendecke selbsttragend zu gestalten, müssen die einzelnen Ofendeckenteile 13a, b auf entsprechende Weise untereinander verbunden werden.

Im Ausführungsbeispiel gemäß Figur 6 ist dazu ein Zwischenstück 28 vorgeschlagen, das im wesentlichen eine doppel-T-Form aufweist. Die feuerfesten Profilteile 20 sitzen dabei mit ihrem jeweils zur Ofenkanalmitte hinweisenden Ende in den seitlichen Öffnungen 28a, b des Zwischenstücks 28 eng ein. Dabei wird die Fassung der feuerfesten Profilteile 20 im Zwischenstück 28, das vorzugsweise aus demselben Material wie die feuerfesten Profilteile 20 besteht, so gewählt, daß sich insgesamt eine selbsttragende Konstruktion zwischen den endseitigen Auflagern 11b, 12b ergibt. Vorteilhaft ist, die horizontalen Abschnitte 11b, 12b im Bereich der Stufen 11a, 12a zum Ofeninneren hin leicht ansteigend auszubilden, so daß sich für die Decke 13 insgesamt eine leichte Gewölbeform ergibt. Dazu müssen die feuerfesten Profilteile 20 einerseits bündig im Zwischenstück 28 bzw. dessen Öffnungen 28a, b einsitzen, andererseits aber auch muß, insbesondere in horizontaler Richtung, etwas Spiel sein, um etwaige thermische Ausweitungen auffangen zu können.

Hierzu bietet die Erfindung einen Lösungsvorschlag an, der vorsieht, daß die feuerfesten Profilteile endseitig, d. h. gegen die vertikalen Abschnitte der Stufen 11a, 12a und/oder gegen die vertikalen Abschnitte der Öffnungen 28a, b des Zwischenstücks 28 federnd abgestützt sind (nicht zeichnerisch dargestellt).

Die zuletzt genannte Ausführungsform kann selbstverständlich auch ohne weiteres bei einer Ofendecke gemäß den Figuren 1 und 2 angewandt werden.

Anstelle des in Figur 6 dargestellten Zwischenstücks 28 kann jedes beliebige andere Zwischenstück verwendet werden, das eine Aufnahme sich gegenüberliegender feuerfester Profilteile 20 gewährleistet, so daß die selbsttragende Gesamtkonstruktion erhalten bleibt. Die in Figur 6 dargestellte Ausführungsform ist insoweit vorteilhaft, als die doppel-T-Form eine Abdichtung der Ofendecke durch die horizontalen T-Schenkel ermöglicht, zwischen denen die Enden der feuerfesten Profilteile 20 einliegen. Sofern erforderlich, kann der Bereich der Öffnungen 28a, b auch noch zusätzlich abgedichtet werden.

Die geeignete Wahl und konstruktive Gestaltung des Zwischenstücks 28 wird im Einzelfall von der Form der verwendeten feuerfesten Profilteile 20 abhängen. Je nach Größe und Gewicht der verwendeten feuerfesten Profilteile können mehrere Zwischenstücke 28 hintereinander, im dargestellten Ausführungsbeispiel entlang des Ofenkanalweges, verwendet werden. Es ist aber auch möglich, nur ein einziges Zwischenstück einzusetzen. Dieses kann zur mechanischen Stabilisierung der Decke unter Umständen endseitig, das wäre bei einem in den Figuren dargestellten Tunnelofen am Ein- bzw. Ausgang, auf entsprechende Querträger aufgelegt werden.

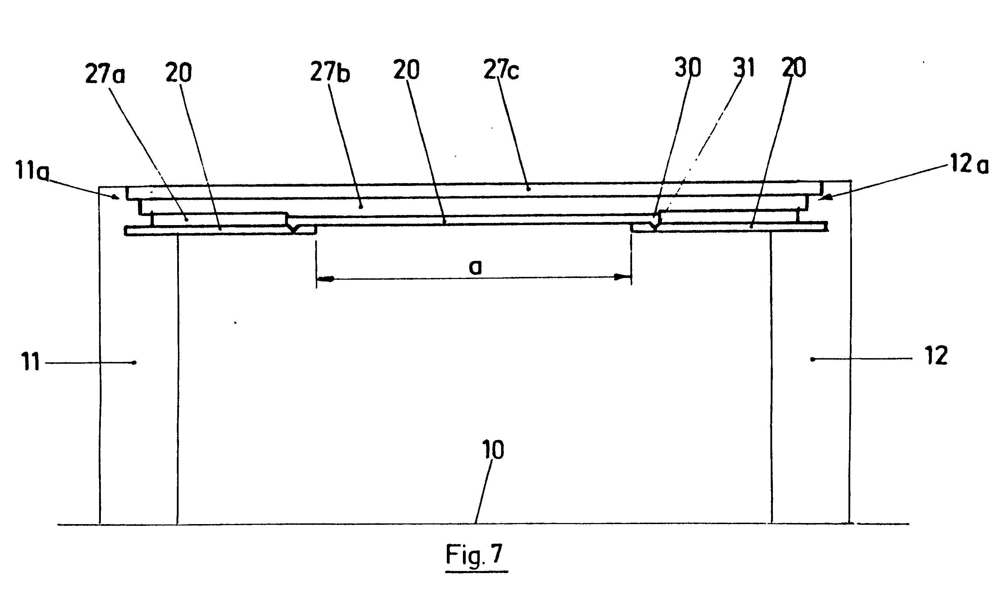

Eine weitere Ausführungsform eines erfindungsgemäßen Industrieofens mit besonders großer Ofenraumbreite mit einer selbsttragenden Ofendecke ist in Figur 7 dargestellt.

Die Seitenwände 11, 12 sind in gleicher Weise wie vorstehend beschrieben an ihren oberen Enden stufenförmig 11a, 12a versetzt ausgebildet.

Die feuerfesten Profilteile 20 liegen jedoch in diesem Ausführungsbeispiel nicht mehr nur auf den horizontalen Abschnitten 11b, 12b der Stufen 11a, 12a auf, sondern sind in die Seitenwände 11, 12 im Bereich der Stufen 11a, 12a eingesetzt und dort praktisch dreiwertig gelagert.

Ausgehend von der Lagefixierung in den Seitenwänden 11, 12 erstrecken sich die einzelnen Profilteile 20 dann horizontal in das Ofenkanalinnere und zwei sich gegenüberliegende feuerfeste Profilteile 20 enden jeweils in konstantem Abstand a zueinander.

Zur Abdeckung des Freiraumes zwischen den freien Enden der endseitig in den Seitenwänden gelagerten feuerfesten Profilteile 20 dienen dann weitere feuerfeste Profilteile 20. Diese können, wie im Ausführungsbeispiel gemäß Figur 7 dargestellt, endseitig mit nach unten abgewinkelten Nasen 30 versehen sein, die in entsprechende oberseitige Ausnehmungen 31 der in den Seitenwänden gelagerten Profilteile 20 eingreifen.

So kann eine besonders günstige Abdichtung des Ofenkanalraumes nach außen hin erreicht werden. Es genügt aber auch, wenn die als Auflageelemente dienenden feuerfesten Profilteile 20 auf die in den Seitenwänden gelagerten Profilteile 20 ohne Rastnasen 30 aufgelegt werden.

Die in Figur 7 dargestellte Ausführungsform eines erfindungsgemäßen Industrieofens weist eine selbsttragende Ofendecke von besonders günstiger Stabilität auf, da die fest in den seitlichen Wänden 11, 12 verankerten feuerfesten Profilteile eine stabile Auflage für die in Form von Auflageelementen gestalteten weiteren Profilteile 20 bilden und die einzelnen Bauteile zwischen den Auflagern nur relativ geringe Distanzen überspannen müssen.

Die Lagefixierung der feuerfesten Profilteile 20 in den Seitenwänden kann dabei auf verschiedene Weise erfolgen. Neben der festen Einmauerung können die Profilteile 20 beispielsweise auch durch Stifte, Klemmen etc. ortsfest gehalten werden. Die Profilteile 20 können auch durch die Seitenwände 11, 12 geführt und außenseitig verankert werden. Vorzugsweise sind entweder die Lagerung in den Seitenwänden 11, 12 oder die Aufnahmen 31 für die Auflageelemente mit gewissem Spiel ausgeführt, um thermische Ausdehnungen beim Erwärmen und Kontraktionen beim Abkühlen des Ofens zu vermeiden.

Weitere Ausführungsformen und Abwandlungen dieser Ausführungsvariante sind ohne weiteres möglich.

Die übrige Deckenkonstruktion, d.h., insbesondere die Isolierung, entspricht der vorstehend beschriebenen. Insbesondere können auch hier leichte Faserisolierqualitäten Verwendung finden, so daß die feuerfesten Profilteile 20 nur gering belastet werden.

Aufgrund der günstigen Thermoschock-Beständigkeit, geringen Kriechdehnung bei hohen Temperaturen und damit hoher Maßhaltigkeit der Profilteile 20 werden Spannungen und damit Verschiebungen der Bauteile der Ofendecke gegeneinander zuverlässig verhindert, so daß auch ein Abrieb der feuerfesten Profilteile 20 und damit ein Herabfallen feuerfester Teilchen nicht mehr zu befürchten ist.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Feuerfestes, als Profilteil gestaltetes Deckenelement zur freitragenden Abdeckung der lichten Weite eines Industrieofens zum Ofeninnenraum hin, dadurch gekennzeichnet, daß das Deckenelement (20) aus einem Material auf der Basis von Siliziumkarbid-Werkstoffen besteht und mindestens eine der beiden Längsseiten zur form- oder kraftschlüssigen Verbindung mit einem sich darin anschließenden Deckenelement (20) profiliert ausgebildet ist.

2. Deckenelement nach Anspruch 1, dadurch gekennzeichnet, daß es aus rekristallisiertem Siliziumkarbid besteht.

3. Deckenelement nach Anspruch 1, dadurch gekennzeichnet, daß es aus reaktionssiliziertem Siliziumkarbid besteht.

4. Deckenelement nach einem der Ansprüche 1 bis 3, dadurch gekennzeichnet, daß es durch hochtemperaturbeständige Fasern oder Gewebe armiert ist.

5. Deckenelement nach einem der Ansprüche 1 bis 4, gekennzeichnet durch eine in der Aufsicht im wesentlichen langgestreckte Rechteckform.

6. Deckenelement nach einem der Ansprüche 1 bis 5, gekennzeichnet durch einen, senkrecht zur Längserstreckung wellen-, sägezahn- oder zinnenförmigen Querschnitt.

7. Deckenelement nach einem der Ansprüche 1 bis 6, dadurch gekennzeichnet, daß seine Längsseiten U-schenkelartig (21, 22) abgewinkelt ausgebildet sind und einer der U-Schenkel (21) an seiner offenen Stirnseite nach außen umgefalzt ist.

8. Decke für einen Industrieofen, bestehend aus mehreren, in Ofenlängsrichtung hintereinander angeordneten feuerfesten Deckenelementen (20) nach einem der Ansprüche 1 bis 7, sowie einer oder mehreren darüber angeordneten Isolierschichten (27a, b, c) vorzugsweise aus Fasermaterialien, insbesondere Aluminiumoxid oder Aluminiumsilikatfasern.

9. Industrieofen mit zwei Seitenwänden (11, 12) und einer sich dazwischen erstreckenden Ofendecke gemäß Anspruch 8, wobei die Ofendecke (13) zusammen mit dem Boden (10) und den Seitenwänden (11,12) den Ofenkanal (14) beziehungsweise die Ofenkammer umschließen.

10. Industrieofen nach Anspruch 9, dadurch gekennzeichnet, daß die Deckenelemente (20) mit ihren gegenüberliegenden freien Enden auf den Seitenwänden (11, 12) unmittelbar oder mittelbar lösbar befestigt sind.

11. Industrieofen nach einem der Ansprüche 9 oder 10, dadurch gekennzeichnet, daß die Deckenelemente (20) zur Aufnahme von thermischen Dehnungen außenseitig federgelagert sind.

## Claims

1. A refractory ceiling element constructed as a profile section for self-supporting covering the clear opening of an industrial furnace with respect to the interior of the furnace, characterized in that the ceiling element (20) consists of a material made of silicon carbide and that at least one of its two long sides is shaped to obtain a form closure or frictional connection with another ceiling element adapted thereto.

2. A ceiling element as defined in claim 1 characterized in that it is made of recrystallized silicon carbide.

3. A ceiling element as defined in claim 1 characterized in that it is made of reaction bonded silicon carbide.

4. A ceiling element as defined in one of claims 1 to 3 characterized in that it is reinforced by high temperature resistant fibres or tissues.

5. A ceiling element as defined in one of claims 1 to 4, characterized in that it is constructed in plan view with an essentially rectangular shape of great length.

6. A ceiling element as defined in one of claims 1 to 5, characterized in that it is constructed with a cross-section, perpendicular to its longitudinal extension, of an undulated, saw-tooth or merlon type.

7. A ceiling element as defined in one of claims 1 to 6, characterized in that its long sides are turned up like a U-shaped leg (21, 22), one of that U-legs (21) being crimped over at its open front end.

8. A ceiling for an industrial furnace, consisting of several refractory ceiling elements as defined in one of claims 1 to 7, arranged one next to the other and one or several isolating layers (27a, b, c) arranged thereupon, preferably made of fibre-materials, especially Alumina or Aluminum silicate fibres.

9. An industrial furnace with two side walls (11, 12) and a furnace ceiling (13) extending therebetween, the furnace ceiling (13) enclosing together with the bottom (10) and the side walls (11,12) the furnace chamber (14) and/or the furnace channel.

10. An industrial furnace according to claim 9, characterized in that the ceiling elements (20) are directly or indirectly detachably secured with their opposing ends on the side walls (11, 12).

11. An industrial furnace according to one of claims 9 or 10, characterized in that the ceiling elements (20) are supported at their end sides by spring bearings in order to absorb thermal expansions.

## Revendications

1. Elément de plafond réfractaire formé comme une pièce profilée pour le recouvrement en porte à faux de l'ouverture d'un four industriel vers l'intérieur du four, caractérisé en ce que l'élément de plafond (20) est constitué par une matière à base de matériaux au carbure de silicium et qu'au moins l'un des deux grands côtés est formé en étant profilé pour réaliser une jonction clabotée ou une adhérence avec un élément de plafond (20) qui s'y adjoint.

2. Elément de plafond selon la revendication 1, caractérisé en ce qu'il est constitué par du carbure de silicium recristallisé.

3. Elément de plafond selon la revendication 1, caractérisé en ce qu' il est constitué par du carbure de silicium silicé par réaction.

4. Elément de plafond selon l'une des revendications 1 à 3, caractérisé en ce qu'il est armé par des fibres ou des tissus résistants aux températures élevées.

5. Elément de plafond selon l'une des revendications 1 à 4, caractérisé par une forme qui, vue d'en haut, est en substance celle d'un rectangle allongé.

6. Elément de plafond selon l'une des revendications 1 à 5, caractérisé par une section ondulée, dentelée ou crénelée perpendiculaire à l'extension en longueur.

7. Elément de plafond selon l'une des revendications 1 à 6, caractérisé en ce que ses grands côtés sont coudés à la façon des branches d'un U (21, 22) et que l'une des branches de U (21) est sertie vers l'extérieur sur son côté frontal ouvert.

8. Plafond de four industriel composé de plusieurs éléments de plafond réfractaires (20) selon l'une des revendications 1 à 7 placés à la suite l'un de l'autre dans le sens de la longueur du four ainsi que d'une ou de plusieurs couches isolantes (27a, b, c) placées au-dessus de ceux-ci, de préférence en matériaux en fibres, en particulier en fibres d'alumine ou de silicate d'aluminium.

9. Four industriel avec deux parois latérales (11, 12) et un plafond de four qui s'étend entre celles-ci selon la revendication 8, le plafond du four (13), le fond (10) et les parois latérales (11, 12) entourant ensemble le carneau du four (14) ou la chambre du four.

10. Four industriel selon la revendication 9, caractérisé en ce que les éléments de plafond (20) sont fixés aux parois latérales (11, 12) par leurs extrémités libres opposées en étant amovibles directement ou indirectement.

11. Four industriel selon l'une des revendications 9 ou 10, caractérisé en ce que les éléments de plafond (20) reposent sur des ressorts sur la face extérieure pour absorber les dilatations thermiques.

Fig. 1

Fig. 2

0172496

Fig.3

Fig.4

Fig.5

Fig.6

Fig. 7

0 172 496